# EUROPÄISCHE PATENTANMELDUNG

(11) **EP 1 525 966 A2**
(43) Veröffentlichungstag der Anmeldung: **27.04.2005**
(21) Anmeldenummer: 04025015.1
(22) Anmeldetag: 21.10.2004
(51) Int. Cl.: B28B 1/14, B28B 11/08, B29C 67/24

(54) **Verfahren zur Herstellung dekorativer Bau- oder Zierelemente mit strukturierten Aussenflächen**

(30) Priorität: 25.10.2003 DE 10349910
(71) Anmelder: MAXX GmbH Gesellschaft für Schutzrechtsverwertung, 91126 Kammerstein (DE)
(72) Erfinder: Traxler, Andreas, 91126 Kammerstein (DE); Traxler, Markus, 91126 Kammerstein (DE)
(74) Vertreter: Hafner, Dieter, Dr. Dipl.-Phys.

(57) **Zusammenfassung**

Verfahren zur Herstellung dekorativer Bau- oder Zierelemente mit strukturierten Außenflächen, insbesondere Säulen, Pfeilern, Trägem, Balustraden, Fassadenelementen, Trögen und Kübeln, Figuren, Ornamenten und dergleichen, wobei in eine offene oder zur Entnahme eines ausgehärteten Gegenstandes zu öffnende Form fließfähiges, betonhaltiges Gießmaterial eingebracht wird, das bedarfsweise mit einem Granulat aus körnigem Schüttgut versetzt wird, wobei zur Befüllung von Formen zur Ausbildung dünnwandiger, hochstehender Bau- oder Zierelemente aushärtende Kunststoffe enthaltender, hochfließfähiger, sich ohne Zuführung von Verdichtungsenergie in der Form vollständig verteilender Betonwerkstoff verwendet wird, der ein Granulat ohne Feinstkomanteil mit Körnungen unter 0,5 mm und ohne Kömungsanteil über 2 mm enthält.

## Beschreibung

Die Erfindung betrifft ein Verfahren zur Herstellung dekorativer Bau- oder Zierelemente mit strukturierten Außenflächen. Derartige Bau- oder Zierelemente sind insbesondere in Form von Säulen, Pfeilern, Trägem, Balustraden, Fassadenelementen, Trögen und Kübeln, Figuren und Ornamenten bekannt. Es ist als Stand der Technik bekannt, in eine Form, die zur Entnahme eines ausgehärteten Gegenstandes in irgendeiner Weise geöffnet werden kann, fließfähiges betonhaltiges Gießmaterial einzubringen, das bedarfsweise mit einem Granulat aus körnigem Schüttgut versetzt wird.

Es hat sich herausgestellt, daß die Durchführung eines solchen Verfahrens, bei dem herkömmliches betonhaltiges Gießmaterial eingebracht wird, nur teilweise zu optisch ansprechenden und mechanisch belastbaren Bau- oder Zierelementen führt, da die eingefüllte Betonmasse sich in enge, filigran ausgebildete Formteile nicht oder nur sehr schwierig einbringen läßt. Dadurch kann es vorkommen, daß die Oberflächen von ausgehärteten Bau- oder Zierelementen nach Ausformung Löcher aufweisen oder vorstehende Teilelemente gar nicht vorhanden sind. Auch die Zuführung von Verdichtungsenergie innerhalb der Form oder durch die Form hindurch führt meist nicht zu einem zufriedenstellenden Erfolg, da sich herausgestellt hat, daß die Verdichtungsenergie sich nicht gleichmäßig in der Form verteilen kann und nicht in Formvorsprünge vordringt.

Der Erfindung liegt die Aufgabe zugrunde, ein Verfahren zur Herstellung dekorativer Bau- oder Zierelemente anzugeben, die mechanisch hochbelastbar sind und eine sandsteinähnliche Oberfläche haben, die zudem oberflächenbearbeitet werden kann. Diese Aufgabe wird durch die Kombination der Merkmale des Anspruches 1 gelöst, vorteilhafte Weiterbildungen des Verfahrens ergeben sich aus den Unteransprüchen 2 - 11.

Als Kern der Erfindung wird es angesehen, zunächst Formen vorzusehen, die zur Ausbildung dünnwandiger, hochstehender Bau- oder Zierelemente ausgebildet sind. Unter hochstehenden Bau- oder Zierelementen werden solche Elemente verstanden, bei denen zumindest ein Abschnitt höher als sein geringster Querschnitt ist. Insbesondere werden Tröge, hohle Säulen, Pfeiler, Träger, Baluster, Kübel, Figuren, Ornamente und dergleichen darunter verstanden. Die bereitgestellten Formen für solche Elemente werden mit hochfließfähigem Betonwerkstoff befüllt, der sich aufgrund seiner Konsistenz und aufgrund der Granulatbeimengung vollständig innerhalb der Form verteilen kann. Es handelt sich also um eine genaue Auswahl von fließfähigem Beton mit einem Granulat ohne Feinstkomanteil mit Körnungen unter 0,5 mm und ohne grobe Körner mit einem Körnungsanteil von über 2 mm. Es hat sich herausgestellt, daß bei Wahl einer derartigen Füllung auch komplizierte, filigrane Formen vollständig ausgefüllt werden können und eine Verfestigung der Betonelemente mit sandsteinähnlicher Oberfläche ohne Zuführung von Verdichtungsenergie möglich ist.

Als besonderer Vorteil hat sich herausgestellt, daß die Oberflächen solcher hergestellten Formlinge durch Strahlen, insbesondere Sandstrahlen effektiv bearbeitet werden können, d. h. eine gewisse sandsteinähnliche Oberflächenrauhigkeit hergestellt werden kann. Darüber hinaus ist es möglich, auch die Oberflächenstruktur von alten oder gealterten Sandsteinelementen durch Oberflächenbearbeitung nachzuahmen.

Als weitere Oberflächenbearbeitungsmethoden kommen chemisches Ätzen oder die Einwirkung von Laserlicht in Frage. Auch aufrauhendes Bürsten führt zum Erfolg, wenn es darum geht, relativ unregelmäßig locker gebundene Bestandteile aus der Oberfläche des abgebundenen Formlings herauszulösen.

Zu diesem Zweck kann es vorteilhaft sein, Granulate mit Materialien unterschiedlicher Bindefähigkeit zum Betonwerkstoff zu verwenden und diese dann durch mechanische oder sonstige Oberflächenbearbeitung ganz oder teilweise aus der Oberfläche herauszulösen.

Wenn der Betonwerkstoff beim Gießvorgang eine Temperatur von ca. 30°C hat, d. h. gegenüber der Raumtemperatur leicht erhöht ist, sind die Verarbeitungseigenschaften optimal. Ein Fließmaß bezogen auf eine Hegermanntrichtermessung von 30 - 32 cm für den Betonwerkstoff führt zu guten Ergebnissen, ebenso wie die Wahl eines Verhältnisses von Mörtelmatrix zu Granulat von 1:0,95.

Nachfolgend wird an einem Ausführungsbeispiel erläutert, wie der erfindungsgemäße Gießvorgang durchgeführt wird.

Zunächst wird in einem ersten Schritt eine passende Form zur Verfügung gestellt, mit der dünnwandige, hochstehende Bau- oder Zierelemente geformt werden können. Die Form hat eine Einfüllöffnung und kann zum Ausformen in irgendeiner Weise geöffnet oder aufgeschnitten werden.

Sodann wird entweder automatisch oder manuell in einer Mischeinrichtung der aushärtende Kunststoffe enthaltende hochfließfähige Betonwerkstoff eingefüllt und mit dem gewünschten Granulat so lange gemischt, bis eine gleichmäßige Durchmischung vorliegt. Es ist wichtig, daß diese gleichmäßige Durchmischung bis zum Einfüllvorgang aufrechterhalten wird. Ein Feinstkornanteil des Granulates unter einer Kömungsgröße von 0,5 mm wird vermieden, ebenso wie ein Grobkornanteil von über 2 mm. Sodann wird die Form befüllt und zur Aushärtung beiseite gestellt. Eine Zuführung von Verdichtungsenergie ist nicht erforderlich. Der Betonwerkstoff wird aufgrund seiner relativ hohen Fließfähigkeit sich in der Form gänzlich verteilen, ohne daß es zu einer Lunkerbildung kommt.

## Patentansprüche

1. Verfahren zur Herstellung dekorativer Bau- oder Zierelemente mit strukturierten Außenflächen, insbesondere Säulen, Pfeilern, Trägern, Balustraden, Fassadenelementen, Trögen und Kübeln, Figuren, Ornamenten und dergleichen, wobei in eine offene oder zur Entnahme eines ausgehärteten Gegenstandes zu öffnende Form fließfähiges, betonhaltiges Gießmaterial eingebracht wird, das bedarfsweise mit einem Granulat aus körnigem Schüttgut versetzt wird,
**dadurch gekennzeichnet, daß** zur Befüllung von Formen zur Ausbildung dünnwandiger, hochstehender Bauoder Zierelemente aushärtende Kunststoffe enthaltender, hochfließfähiger, sich ohne Zuführung von Verdichtungsenergie in der Form vollständig verteilender Betonwerkstoff verwendet wird, der ein Granulat ohne Feinstkornanteil mit Körnungen unter 0,5 mm und ohne Körnungsanteil über 2 mm enthält.

2. Verfahren nach Anspruch 1,
**dadurch gekennzeichnet, daß** die ausgehärteten Bauelemente nach Ausformung oberflächenbearbeitet werden.

3. Verfahren nach Anspruch 2,
**dadurch gekennzeichnet, daß** die Oberflächenbearbeitung durch Strahlen erfolgt oder einen Strahlvorgang umfaßt.

4. Verfahren nach Anspruch 2,
**dadurch gekennzeichnet, daß** die Oberflächenbearbeitung durch chemisches Ätzen der Oberfläche erfolgt oder einen Ätzvorgang umfaßt.

5. Verfahren nach einem der vorhergehenden Ansprüche,
**dadurch gekennzeichnet, daß** die Oberflächenbearbeitung durch Einwirkung von elektromagnetischer Strahlungsenergie, insbesondere fokusiertem Laserlicht erfolgt.

6. Verfahren nach einem der vorhergehenden Ansprüche,
**dadurch gekennzeichnet, daß** die Oberflächenbearbeitung durch aufrauhendes Bürsten erfolgt.

7. Verfahren nach einem der vorhergehenden Ansprüche,
**dadurch gekennzeichnet, daß** Granulat mit Materialien unterschiedlichen Härtegrades verwendet werden.

8. Verfahren nach einem der vorhergehenden Ansprüche,
**dadurch gekennzeichnet, daß** Granulate mit Materialien unterschiedlicher Bindefähigkeit zum Betonwerkstoff verwendet werden und durch mechanische Oberflächenbearbeitung schwächer gebundene Materialien ganz oder teilweise aus der Oberfläche ausgelöst werden.

9. Verfahren nach einem der vorhergehenden Ansprüche,
**dadurch gekennzeichnet, daß** beim Gießvorgang der Betonwerkstoff eine Temperatur von ca. 30°C hat.

10. Verfahren nach einem der vorgehenden Ansprüche,
**dadurch gekennzeichnet, daß** beim Gießvorgang der Betonwerkstoff ein Fließmaß (mit Hegermanntrichter) von 30 - 32 cm erreicht.

11. Verfahren nach einem der vorhergehenden Ansprüche,
**dadurch gekennzeichnet, daß** das Verhältnis von Mörtelmatrix und Granulat etwa 1:0,95 beträgt.
